# EUROPEAN PATENT APPLICATION

(11) **EP 4 372 637 A1**
(43) Date of publication of application: **22.05.2024**
(21) Application number: 22208203.4
(22) Date of filing: 18.11.2022
(51) Int. Cl.: G06Q 10/06, G06Q 10/087, G06Q 10/20, G07C 5/00, H04W 4/029

(54) **A SYSTEM AND METHOD THEREIN FOR ASSIGNING AN ENVIRONMENTAL IMPACT TO MASS EXCAVATION PROJECTS**

(71) Applicant: VOLVO TRUCK CORPORATION, 405 08 Göteborg (SE)
(72) Inventor: SOHLBERG, Per, 436 52 Hovås (SE); REEDIJK, Marnix, 722 44 Västerås (SE)
(74) Representative: Zacco Sweden AB

(57) **Abstract**

A system and method therein for assigning environmental impact values to mass excavation projects utilizing an excavation site is described. The method comprise obtaining a daily operating time of one or more loading assets at the excavation site, determining at least one first environmental impact based on the obtained daily operating time and at least one fuel or energy consumption rate, obtaining a distance to a target depositing site for one or more transporting assets, determining at least one second environmental impact based on the obtained distances and at least one fuel or energy consumption rate, and assigning at least part of the determined first and second environmental impact to one or more of the mass excavation projects. Computer program products and storage mediums are also described.

## Description

### TECHNICAL FIELD

The disclosure relates generally to a mass excavation projects. In particular aspects, the disclosure relates to a system and method therein for assigning an environmental impact to mass excavation projects utilizing an excavation site, wherein the excavation site engage one or more loading assets and one or more transporting assets. In further aspects, the disclosure also relates to computer program products and storage mediums for performing the method.

### BACKGROUND

In mass excavation projects, a large amount of excavated material at one or more excavation sites are normally loaded onto transporting assets, e.g. trucks, haulers, or other material transport vehicles, by loading assets, e.g. excavators, wheel loaders, material handlers, cranes or other working machines/vehicles, engaged by and operating at the one or more excavations sites. Hence, the transporting assets engaged by the one or more excavations sites are able to load out the excavated material from the one or more excavations sites. The load-out material from the one or more excavations sites is then typically transported by the engaged transporting assets towards an assigned destination site, such as, for example, a landfill, dump site or a specific material depot. Landfills or dump sites are normally for storage, e.g. to fill out land or temporary placement, while specific depots may be used for necessary further processing of the load-out material. For example, load-out material that may comprise hazardous and/or contaminated material may need to be transported to such specific depots to be processed in a specific manner; this, in order to ensure compliance with certain laws, regulations or environmental requirements when handling these type of materials.

Today, however, when managing a mass excavation project utilizing one or more excavation sites, it is difficult to assess the environmental impact of the mass excavation project. This is because each excavation site may engage a large amount of loading assets and transporting assets from many different manufacturers and operators at different points in time. The some of the loading assets and transporting assets may also be partly utilized for other mass excavation projects at different excavation sites. Hence, there is a need to be able to fairly assess the environmental impact of mass excavation projects.

### SUMMARY

According to a first aspect of the embodiments herein, a computer-implemented method performed by a system for an assigning environmental impact to mass excavation projects utilizing an excavation site is described. The excavation site engage one or more loading assets and one or more transporting assets. The method comprise obtaining a daily operating time of the one or more loading assets at the excavation site based on the time between a first daily registered transport of excavated material load away from the excavation site and a last daily registered transport of an excavated material load away from the excavation site by the one or more transporting assets. Also, the method comprise determining at least one first environmental impact for the one or more loading assets based on the obtained daily operating time and at least one fuel or energy consumption rate of the one or more loading assets. Furthermore, the method comprise obtaining, a distance to a target depositing site for each registered transport of an excavated material load away from the excavation site by the one or more transporting assets. The method also comprise determining at least one second environmental impact for the one or more transporting assets based on the obtained distances and at least one fuel or energy consumption rate of the one or more transporting assets. Further, the method comprise assigning at least part of the determined first and second environmental impact to one or more of the mass excavation projects.

The first aspect of the disclosure may seek to enable an improved management of a mass excavation project by enabling a fair assessment of its environmental impact. A technical benefit is an agnostic and simple solution as presented above that do not require a complex and time-consuming collection of operational information from large amount of assets and operators, or different configuration setups to be performed by asset manufacturers, to obtain a fair assessment of a mass excavation project's environmental impact.

In some embodiments, the at least part of the determined first and second environmental impact may be assigned to one or more of the mass excavation projects based on an assigned utilization share of the excavation site to each respective mass excavation project. A technical benefit may include that environmental impacts may be assigned to different mass excavation projects utilizing the same excavation site.

In some embodiments, the distance may be obtained based on a predetermined distance associated with the target depositing site assigned to each registered transport of an excavated material load away from the excavation site by the one or more transporting assets. As a transporting asset is registering its transport or load-out of excavated material from the excavation site and thus is assigned a target deposition site, e.g. via a load receipt, a technical benefit may include using the known distance to the assigned target deposition site to determine the at least one second environmental impact for the one or more transporting assets. Optionally, in some embodiments, the distance may be obtained based on location data provided by each of the one or more transporting assets. Here, a technical benefit may include that the transporting assets may be more flexibly assigned to different mass excavation projects and/or excavation sites without negatively affecting the determination of the environmental impact of the different mass excavation projects. For example, after unloading the excavated material at the target depositing site from a first excavation site of a first mass excavation project, the transport assets may proceed to another excavation site of a second mass excavation project without this affecting the determination of the environmental impact of the first mass excavation project.

In some embodiments, the environmental impact may be represented by a carbon-dioxide, CO₂, or carbon-dioxide equivalent, CO₂e, indicator or value. A technical benefit may include that a well-defined and commonly relatable measurement of the environmental impact may be established and assigned to the mass excavation projects.

In some embodiments, the method may further comprise providing, to a user application, information indicating the environmental impact assigned to a mass excavation project upon receiving a request from the user application. A technical benefit may include that a manager of a mass excavation project may be notified about the environmental impact of the mass excavation project or that a site manager of an excavation site may be informed about the environmental impact that has been assigned to different mass excavation projects utilizing the excavation site, etc.

According to a second aspect of the embodiments herein, a system for assigning an environmental impact to mass excavation projects utilizing an excavation site is described. The excavation site engage one or more loading assets and one or more transporting assets. The system comprises a processing circuitry and a memory. The processing circuitry is configured to obtain a daily operating time of the one or more loading assets at the excavation site based on the time between a first daily registered transport of excavated material load away from the excavation site and a last daily registered transport of an excavated material load away from the excavation site by the one or more transporting assets, determine at least one first environmental impact for the one or more loading assets based on the obtained daily operating time and at least one fuel or energy consumption rate of the one or more loading assets, obtain a distance to a target depositing site for each registered transport of an excavated material load away from the excavation site by the one or more transporting assets, determine at least one second environmental impact for the one or more transporting assets based on the obtained distances and at least one fuel or energy consumption rate of the one or more transporting assets, and assign at least part of the determined first and second environmental impact to one or more of the mass excavation projects.

In some embodiments, the processing circuitry may further be configured to assign the determined first and second environmental impact values based on an assigned utilization share of the excavation site to each respective mass excavation project.

In some embodiments, the processing circuitry may further be configured to obtain the distance based on a predetermined distance associated with the target depositing site assigned to each registered transport of an excavated material load away from the excavation site by the one or more transporting assets. Optionally, in some embodiments, the processing circuitry may further be configured to obtain the distance based on location data provided by each of the one or more transporting assets.

In some embodiments, the environmental impact may be represented by a carbon-dioxide, CO₂, or carbon-dioxide equivalent, CO₂e, indicator or value. In some embodiments, the processing circuitry may further be configured to provide, to a user application, information indicating the environmental impact assigned to a mass excavation project upon receiving a request from the user application. Effects and advantages of this second aspect is to a large extent analogous to those described above in connection with the first aspect.

According to a third aspect of the embodiments herein, a computer program product comprising program code means for performing the steps of the methods described above when said program is run on a processing circuitry of a network system or a processing circuitry of a user device, respectively, is described. According to a fourth aspect of the embodiments herein, a non-transitory computer-readable storage medium comprising instructions, which when executed on a processing circuitry of a network system or on a processing circuitry of a user device, cause the processing circuitry to perform the methods described above is described. Effects and advantages of the third and fourth aspects are to a large extent analogous to those described above in connection with the first and second aspect.

The above aspects, accompanying claims, and/or embodiments disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
**FIG. 1** is a schematic illustration of communications network in which a system configured to assign an environmental impact to mass excavation projects utilizing an excavation site according to some embodiments may be implemented,
**FIG. 2** is a schematic illustration of different excavation sites of different mass excavations projects according to some embodiments,
**FIG. 3** is a flowchart depicting embodiments of a method for assigning an environmental impact to mass excavation projects utilizing an excavation site according to some embodiments,
**FIG. 4** is a schematic block diagram depicting embodiments of a system, and
**FIG. 5** is a schematic diagram of an exemplary computer system for implementing embodiments disclosed herein according to some embodiments.

### DETAILED DESCRIPTION

Aspects set forth below represent the necessary information to enable those skilled in the art to practice the disclosure.

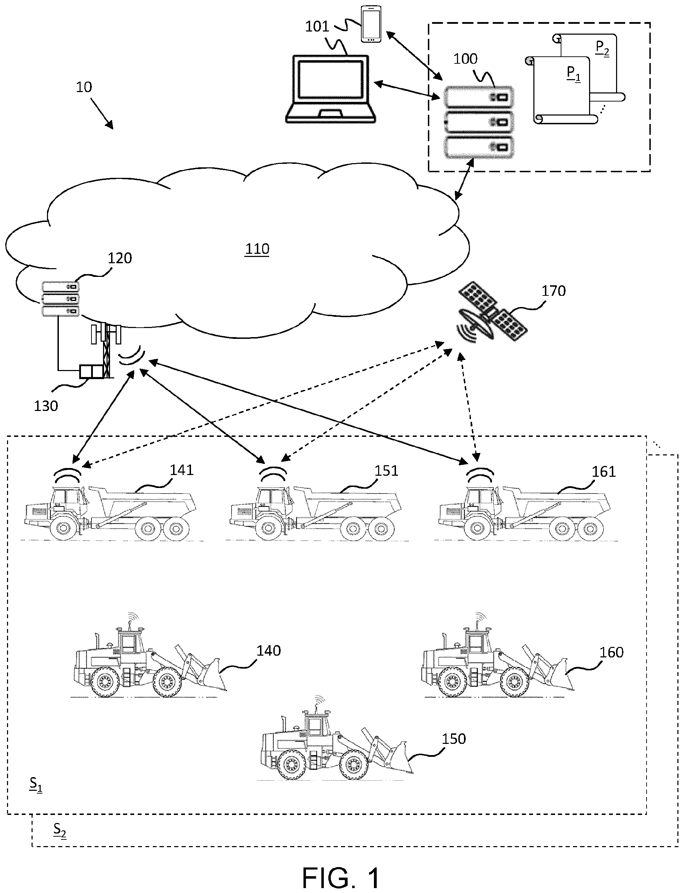

**FIG. 1** illustrates an example of a **communication system 10** in which the system 100 for assigning an environmental impact to **mass excavation projects P₁, P₂** utilizing an **excavation site S₁, S₂,** according to embodiments described herein may be implemented. Here, it should be noted that the **system 100** may be implemented by one or more centrally located and/or distributed network units, such as, e.g. online data processing server(s), configured to manage the mass excavation projects P₁**,** P₂. The system 100 may also form part of a cloud service configured to manage the mass excavation projects P₁, P₂.

The system 100 may be configured to communicate with and provide information to one or more **user terminals 101,** such as, computers, wireless communication devices, etc. According to some embodiments, the system 100 may be connected to and configured to wirelessly communicate via a **wireless communications network 110,** wherein the wireless communications network 110 may comprise one or more **access points and/or radio base stations 120, 130** providing wireless communication access to wireless communications enabled devices.

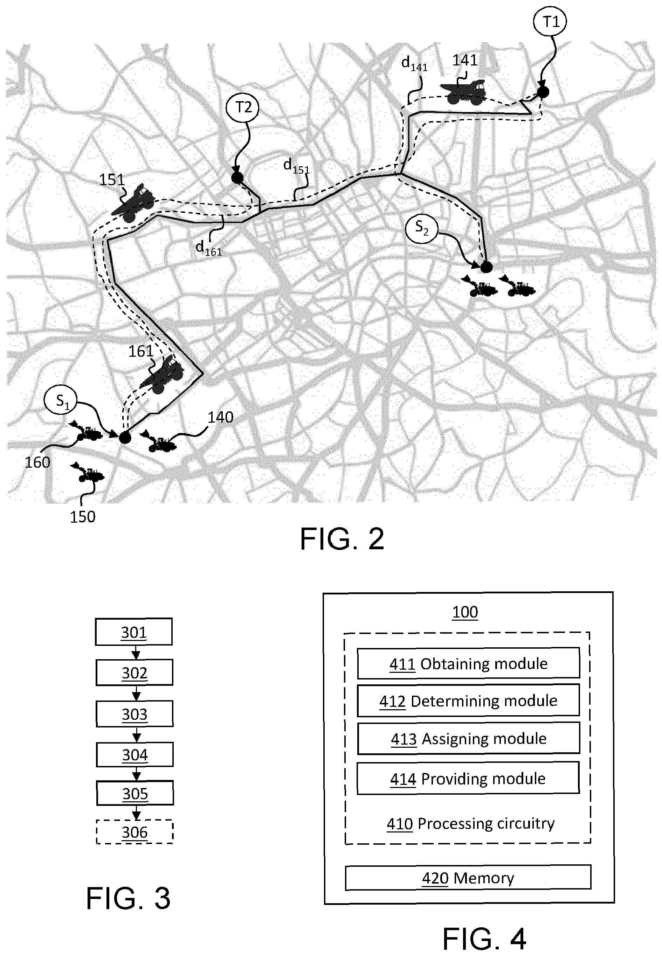

In FIG. 1, excavation sites S₁, S₂ that may be utilized by the mass excavation projects P₁, P₂ is illustrated. Each excavation site S₁, S₂ may engage **one or more loading assets 140, 150, 160** and one or more **transport assets 141, 151, 161.** Each of the loading assets 140, 150, 160 may be any form of vehicle arranged to haul or load excavated material onto the one or more transporting assets 141, 151, 161, such as, an excavator, a loader, a bulldozer, etc. Also, each of the one or more transporting assets 141, 151, 161 may be any form of vehicle arranged to carry and transport excavated material from the excavation site S₁, S₂, such as, e.g. a truck, a hauler, a load carrier, etc., to a target depositing site T₁, T₂, as shown in FIG. 2. Here, it should be noted that each of the loading assets 140, 150, 160 and the one or more transporting assets 141, 151, 161 may be made by different manufacturers and operated by different operators, each implementing their own proprietary on-board/off-board systems, devices, and applications.

According to some embodiments, each of the one or more transporting assets 141, 151, 161 may comprise a wireless communications enabled device (not shown) that is able to communicate wirelessly within the communication system 10 as shown in FIG. 1. For example, the wireless communications enabled device may be embedded in an on-board communication system of the one or more transporting assets 141, 151, 161. Optionally, the wireless communications enabled device may be operated by the driver of the one or more transporting assets 141, 151, 161. In this case, the wireless communications enabled device may, for example, be a mobile device or user terminal, such as, a mobile, cellular or smart phone or tablet, being capable of wireless communications with the system 100 via the wireless communications network 110. Furthermore, each of the one or more transporting assets 141, 151, 161 may, in some embodiments, comprise a Global Positing System, GPS, receiver or similar configured to receive the location of the transporting asset 141, 151, 161 from a GPS system 170.

As part of developing the embodiments described herein, it has been realized that as a loading asset 140, 150, 160 at an excavation site S₁, S₂ utilized by a mass excavation project P₁, P₂ has finished loading excavated material onto a transporting asset 141, 151, 161, a digital load receipt for the transporting asset 141, 151, 161 may be generated, for example, by the system 100. This may, for example, be performed in response to receiving information from the wireless communications enabled device comprised in the one or more transporting assets 141, 151, 161 or from an on-site load check-out system implemented at the excavation site S₁, S₂. This information may indicate that the transporting asset 141, 151, 161 has been loaded with excavated material and is about to transport the excavated material away from the excavation site S₁, S₂. The digital load receipt may register the transport of the excavated material by the transporting asset 141, 151, 161 and assign a target depositing site T₁, T₂ for the transporting asset 141, 151, 161. In other words, upon generating the digital load receipt, the system 100 may connect each digital load receipt with one of the available target depositing sites T₁, T₂, which then will direct the driver of the transporting asset 141, 151, 161 to the assigned target depositing site T₁, T₂. Here, the system 100 may comprise and provide information, e.g. in the digital load receipt, indicating the distance to each of the available target depositing sites T₁, T₂.

Hence, in accordance with the embodiments described herein, an agnostic and simple solution solely based on the information available by the digital load receipts of the transporting asset 141, 151, 161, is achieved, which enables a fair assessment of a mass excavation project's environmental impact and thus improves the management of mass excavation projects.

**FIG. 2** shows an example of excavation sites S₁, S₂ of mass excavation projects P₁, P₂, respectively. In this example, possible routes of different transporting assets 141, 151, 161 from the excavation sites S₁, S₂ to target depositing sites T₁, T₂ are also shown. Here, as shown by the dotted line, the transporting asset 141 is currently carrying a load from the excavation site S₂ to its assigned target depositing site T₁ located at a distance d₁₄₁. Similarly, the transporting asset 151 is currently carrying a load from the excavation site S₁ to its assigned target depositing site T₁ located at a distance d₁₅₁, while the transporting asset 161 is currently carrying a load from the excavation site S₁ to its assigned target depositing site T₂ located at a distance d₁₅₁. Each of the excavation sites S₁, S₂ may engage a number of different loading assets, such as, e.g. the loading assets 140, 150, 160 at excavation site S₁.

Each of the transporting assets 141, 151, 161 and the loading assets 140, 150, 160 may be of different manufacturers or OEMs, and be operated by different operators or operating fleet companies. For example, the transporting assets 141 and the loading assets 140, 150 may be operated by one fleet operator 151, 161, while the transporting assets 151, 161 and the loading assets 160 may be operated by another fleet operator 151, 161.

Furthermore, each of the transporting assets 141, 151, 161 and the loading assets 140, 150, 160 may operate at or from one of the excavation sites S₁, S₂ for a part of a work day or work week, and then switch to operate at or from another one of the excavation sites S₁, S₂ for the remainder of the work day or work week. This means that each of the transporting assets 141, 151, 161 and the loading assets 140, 150, 160 may work on several different mass excavation projects P₁, P₂ at different points in time. This flexibility for the transporting assets 141, 151, 161 and the loading assets 140, 150, 160, along with the fact that they are normally operated by different fleet operator and made from different manufacturers, means that the collection of information of how much time each asset spend on operations relating to a specific one of the mass excavation projects P₁, P₂ a complicated, arduous and time-consuming task which is not particularly prone to automation.

It should also be noted that although only three transporting assets and two destination sites are shown associated with the mass excavation project in FIG.2 for the sake of simplicity, it should be noted that a mass excavation project may be associated with any number or plurality of different transporting assets and/or any number or plurality of different destination sites.

Embodiments of a computer-implemented method performed by a system 100 for assigning an environmental impact to mass excavation projects P₁, P₂ utilizing an excavation site S₁, S₂, wherein the excavation site S₁, S₂ engage one or more loading assets 140, 150, 160 and one or more transporting assets 141, 151, 161, will now be described with reference to the flowchart depicted in **FIG. 3.** FIG. 3 is an illustrated example of actions, steps or operations which may be performed by the system 100 described above with reference to FIGS. 1 and 2. The method may comprise the following actions, steps or operations.

**Action 301.** The system 100 obtains a daily operating time t₁ of the one or more loading assets 140, 150, 160 at the excavation site S₁, S₂ based on the time between a first daily registered transport of excavated material load away from the excavation site S₁, S₂ and a last daily registered transport of an excavated material load away from the excavation site S₁, S₂ by the one or more transporting assets 141, 151, 161. This means that as the system 100 is notified, e.g. by a driver or a site check-out system, that, for example, the transporting asset 151 has been loaded with today's first excavated material load at the site S₁ of the mass excavation project P₁ and intends to transport the excavated material away from the site S₁ of the mass excavation project P₁, the system 100 may start a daily operating time t₁ for the one or more loading assets 140, 150, 160 at the excavation site S₁. This may be perform simultaneously as the system 100 generates the load receipt for the transporting asset 151 and in doing so, obtains a time-stamp of the first daily load-out from the excavation site S₁. Furthermore, this also means that as the system 100 is notified, e.g. by a driver or a site check-out system, that, for example, the transporting asset 161 has been loaded with today's last excavated material load at the site S₁ of the mass excavation project P₁ and intends to transport the excavated material away from the site S₁ of the mass excavation project P₁, the system 100 may stop the daily operating time t₁ for the one or more loading assets 140, 150, 160 at the excavation site S₁. This may be perform simultaneously as the system 100 generates the load receipt for the transporting asset 161 and in doing so obtains a time-stamp of the last daily load-out from the excavation site S₁.

**Action 302.** After obtaining the daily operating time t₁ in Action 301, the system 100 determine at least one first environmental impact E₁ for the one or more loading assets 140, 150, 160 based on the obtained daily operating time t₁ and at least one fuel or energy consumption rate of the one or more loading assets 140, 150, 160. This means, for example, that the system 100 may use the obtained daily operating time t₁ and an average fuel consumption per hour of the one or more loading assets 140, 150, 160 in order to determine a daily fuel consumption at the excavation site S₁. This daily fuel consumption may then be used to determine a first environmental impact E₁, such as, e.g. a CO₂-footprint, of the total daily activity of the one or more loading assets 140, 150, 160 at the excavation site S₁. Here, it should also be noted that several different fuel consumptions, or average fuel consumptions may be used depending e.g. on the composition of the one or more loading assets 140, 150, 160. In some embodiments, the environmental impact E₁ is represented by a carbon-dioxide, CO₂, or carbon-dioxide equivalent, CO₂e, indicator or value.

**Action 303.** The system 100 also obtains a distance d₁₄₁, d₁₅₁, d₁₆₁ to a target depositing site T₁, T₂ for each registered transport of an excavated material load away from the excavation site S₁, S₂ by the one or more transporting assets 141, 151, 161. This means that as the system 100 is notified, e.g. by a driver or a site check-out system, that, for example, the transporting asset 151 has been loaded with an excavated material load at the site S₁ of the mass excavation project P₁ and intends to transport the excavated material away from the site S₁ of the mass excavation project P₁, the system 100 may register the distance d₁₅₁ to the target depositing site T₁ assigned to the transporting asset 151 for the load-out. This may be perform simultaneously as the system 100 generates the load receipt for the transporting asset 151 and in doing so, assigns a target depositing site T₁ of the load-out by the transporting asset 151 from the excavation site S₁.

According to some embodiments, the distance d₁₄₁, d₁₅₁, d₁₆₁ may be obtained based on a predetermined distance associated with the target depositing site T₁, T₂ assigned to each registered transport of an excavated material load away from the excavation site S₁, S₂ by the one or more transporting assets 141, 151, 161. This means, for example, that the system 100 may have access to information indicating the distance to each target depositing site T₁, T₂ from each excavation site S₁, S₂.

Optionally, according to some embodiments, the distance d₁₄₁, d₁₅₁, d₁₆₁ may be obtained based on location data provided by each of the one or more transporting assets 141, 151, 161. This means, for example, that the system 100 may receive location data, such as, geographical positioning system, GPS, data or position data obtained via the wireless communications network 110 in the communications system 10. Here, one advantage here is that the system 100 may determine when a transporting asset 141, 151, 161 has switched from transporting loads from the excavation site S₁ to transporting loads from the excavation site S₂, and thus is able to obtain more accurate distance data for the transporting assets 141, 151, 161. In other words, GPS tracking or similar may be used to report transport missions in real time to the system 100, which e.g. may include cloud enabling advanced analytics, to conclude if the reported route of a transporting asset 141, 151, 161 is bound to a specific context, e.g. one or more of the mass excavation projects P₁, P₂. If the route is connected to one or more of the mass excavation projects P₁, P₂, the system100 may use a standard consumption/km, do the calculation of transport mission consumption/emission, and store it associated with one or more of the mass excavation projects P₁, P₂.

**Action 304.** After obtaining each distance d₁₄₁, d₁₅₁, d₁₆₁ for each of the one or more transporting asset 141, 151, 161 for the excavation site S₁, S₂ in Action 303, the system 100 determines at least one second environmental impact E₂ for the one or more transporting assets 141, 151, 161 based on the obtained distances d₁₄₁, d₁₅₁, d₁₆₁ and at least one fuel or energy consumption rate of the one or more transporting assets 141, 151, 161. This means, for example, that the system 100 may use the obtained distance d₁₄₁, d₁₅₁, d₁₆₁ for each of the one or more transporting asset 141, 151, 161 for the excavation site S₁, S₂ and an average fuel consumption per hour for the one or more transporting asset 141, 151, 161 in order to determine a daily fuel consumption for the load-outs from the excavation site S₁. This daily fuel consumption may then be used to determine a second environmental impact E₂, such as, e.g. a CO₂-footprint, of the total transport activity of the one or more transporting asset 141, 151, 161 from the excavation site S₁. Here, it should also be noted that several different fuel consumptions, or average fuel consumptions may be used depending e.g. on the composition of the one or more transporting assets 141, 151, 161. In some embodiments, the environmental impact E₂ is represented by a carbon-dioxide, CO₂, or carbon-dioxide equivalent, CO₂e, indicator or value.

**Action 305.** After determining the first and second environmental impact E₁, E₂ in Actions 302 and 304, the system 100 assigns at least part of the determined first and second environmental impact E₁, E₂ to one or more of the mass excavation projects P₁, P₂. This means, for example, that the system 100 may assign the first and second environmental impact E₁, E₂ to the mass excavation project P₁ that utilizes the excavation site S₁. Here, according to some embodiments, the system 100 may assign parts of the first and second environmental impact E₁, E₂ based on an assigned utilization share of the excavation site S₁, S₂ to each respective mass excavation project P₁, P₂. This means, for example, that the system 100 may assign part of the first and second environmental impact E₁, E₂ determine for each the excavation site S₁, S₂ to several different mass excavation projects, e.g. mass excavation projects P₁ and P₂, that utilizes the excavation sites S_{1,} S₂. For example, the mass excavation projects P₁ and P₂ may share the excavation site S₁ at a 50/50 ratio and the excavation site S₂ at a 60/40 ratio, hence the first and second environmental impact E₁, E₂ be divided between the mass excavation projects P₁ and P₂ according to the same utilization ratios.

**Action 306.** Optionally, in some embodiments, the system 100 may provide to a user application, information indicating the environmental impact assigned to a mass excavation project P₁, P₂ upon receiving a request from the user application. This means, for example, that the system 100 may, automatically or upon request from one or more user terminals 101, provide the environmental impact information, e.g. at least parts of the determined first and second environmental impact E₁, E₂, assigned to a mass excavation project P₁, P₂ to a user application in the one or more user terminals 101, in order for the environmental impact information to be displayed to a user of the one or more user terminals 101. In other words, the system 100 may do emission reporting upon request, in real time or periodically, through different channels to the users, e.g. customers, authorities or other stakeholders, of the user application. This means that the system 100 is able of providing a customer perspective instead of a fleet or OEM perspective, since it has the capability to use the emission impact from several different asset and compiling them into environmental impact figures or quantities that may be used to give a user a view of a project, such as, e.g. a building, a road or other types of projects.

To perform the method actions in a system 100 for assigning an environmental impact to mass excavation projects P₁, P₂ utilizing an excavation site S₁, S₂, wherein the excavation site S₁, S₂ engage one or more loading assets 140, 150, 160 and one or more transporting assets 141, 151, 161, the system 100 may comprise the following arrangement depicted in **FIG 4.** FIG 4 shows a schematic block diagram of embodiments of the system 100. The embodiments of the system 100 described herein may be considered as independent examples, or may be considered in any combination with each other to describe non-limiting examples. It should also be noted that, although not shown in FIG. 4, it should be noted that known conventional features of a system 100, such as, for example, a connection to the mains, network connections (e.g. input/output ports, etc.), etc., may be assumed to be comprised in the system 100 but is not shown or described any further in regards to FIG. 4. The system 100 may comprise one or more centrally located or distributed network unit(s), wherein the system 100 and the one or more network unit(s) may comprise a **processing circuitry 410** and a **memory 420.** It should also be noted that some or all of the functionality described in the examples above as being performed by the system 100 may be provided by the processing circuitry 410 executing instructions stored on a computer-readable medium, such as, the memory 420 shown in FIG. 4. The processing circuitry 410 may also comprise an **obtaining module 411,** a **determining module 412,** an **assigning module 413,** and a **providing module 414,** each responsible for providing its functionality to support the examples described herein.

The system 100 or processing circuitry 410 is configured to, or may comprise the obtaining module 411 configured to, obtain a daily operating time t₁ of the one or more loading assets 140, 150, 160 at the excavation site S₁, S₂ based on the time between a first daily registered transport of excavated material load away from the excavation site S₁, S₂ and a last daily registered transport of an excavated material load away from the excavation site S₁, S₂ by the one or more transporting assets 141, 151, 161. Also, the system 100 or processing circuitry 410 is also configured to, or may comprise the determining module 412 configured to, determine at least one first environmental impact E₁ for the one or more loading assets 140, 150, 160 based on the obtained daily operating time t₁ and at least one fuel or energy consumption rate of the one or more loading assets 140; 150, 160. Further, the system 100 or processing circuitry 410 is configured to, or may comprise the obtaining module 411 configured to, obtain a distance d₁₄₁, d₁₅₁, d₁₆₁ to a target depositing site T₁, T₂ for each registered transport of an excavated material load away from the excavation site S₁; S₂ by the one or more transporting assets 141, 151, 161. Furthermore, the system 100 or processing circuitry 410 is configured to, or may comprise the determining module 412 configured to, determine at least one second environmental impact E₂ for the one or more transporting assets 141, 151, 161 based on the obtained distances d₁₄₁, d₁₅₁, d₁₆₁ and at least one fuel or energy consumption rate of the one or more transporting assets 141, 151, 161. Also, the system 100 or processing circuitry 410 is also configured to, or may comprise the assigning module 413 configured to, assign at least part of the determined first and second environmental impact E₁, E₂ to one or more of the mass excavation projects P₁, P₂.

In some embodiments, the system 100 or processing circuitry 410 may be configured to, or may comprise the assigning module 413 configured to, assign the determined first and second environmental impact values E₁, E₂ based on an assigned utilization share of the excavation site S₁, S₂ to each respective mass excavation project P₁, P₂. According to some embodiments, the network system 100 or processing circuitry 410 may be configured to, or may comprise the obtaining module 411 configured to, obtain the distance d₁₄₁, d₁₅₁, d₁₆₁ based on a predetermined distance associated with the target depositing site T₁, T₂ assigned to each registered transport of an excavated material load away from the excavation site S₁, S₂ by the one or more transporting assets 141, 151, 161. In some embodiments, the network system 100 or processing circuitry 410 may be configured to, or may comprise the obtaining module 411 configured to, obtain the distance d₁₄₁, d₁₅₁, d₁₆₁ based on location data provided by each of the one or more transporting assets 141, 151, 161. In some embodiments, the environmental impact E₁, E₂ may be represented by a carbon-dioxide, CO₂, or carbon-dioxide equivalent, CO₂e, indicator or value.

In some embodiments, the network system 100 or processing circuitry 410 may be configured to, or may comprise the providing module 512 configured to, provide, to a user application, information indicating the environmental impact E₁, E₂ assigned to a mass excavation project P₁, P₂ upon receiving a request from the user application.

Furthermore, the embodiments for assigning an environmental impact to mass excavation projects P₁, P₂ utilizing an excavation site S₁, S₂ described above may be implemented through one or more processors, such as the processing circuitry 410 in the network system 100 depicted in FIG. 4, together with computer program code for performing the functions and actions of the examples herein. The program code mentioned above may also be provided as a computer program product, for instance in the form of a data carrier carrying computer program code or code means for performing the examples herein when being loaded into the processing circuitry 410 in the system 100. The computer program code may e.g. be provided as pure program code in the network system 100 or on a server and downloaded to the system 100. Thus, it should be noted that the modules of the system 100 may in some examples be implemented as computer programs stored in memory, e.g. in the memory modules 420 in FIG. 4, for execution by processors or processing modules, e.g. the processing circuitry 410 of FIG. 4. Those skilled in the art will also appreciate that the processing circuitry 410 and the memory 620 described above may refer to a combination of analog and digital circuits, and/or one or more processors configured with software and/or firmware, e.g. stored in a memory, that when executed by the one or more processors such as the processing circuitry 410 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

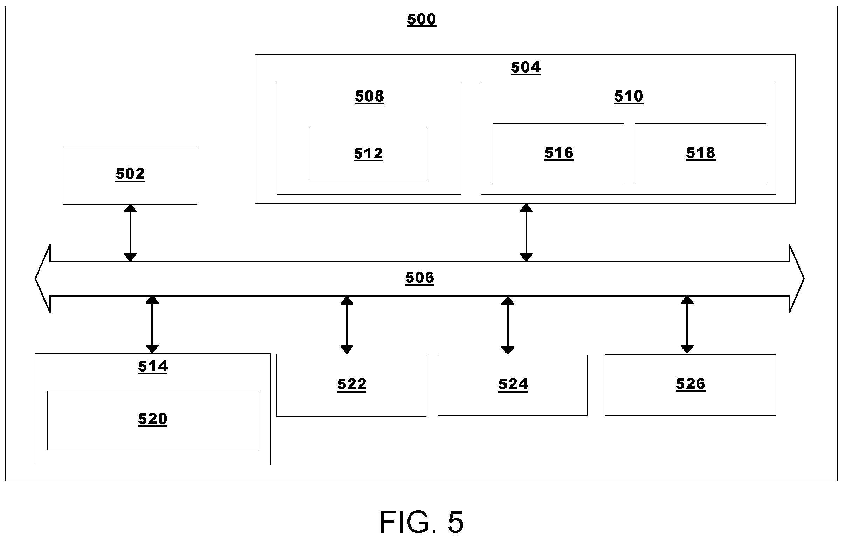

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include a processor device **502** (may also be referred to as a control unit), a memory **504,** and a system bus **506.** The computer system **500** may include at least one computing device having the processor device **502.** The system bus **506** provides an interface for system components including, but not limited to, the memory **504** and the processor device **502.** The processor device **502** may include any number of hardware components for conducting data or signal processing or for executing computer code stored in memory **504.** The processor device **502** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processor device **502** (e.g., via a circuit or any other wired, wireless, or network connection) and may include computer code for executing one or more processes described herein. The memory **504** may include non-volatile memory **505** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with a processor device **502.** A basic input/output system (BIOS) **512** may be stored in the non-volatile memory **505** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **514** and/or in the volatile memory **510,** which may include an operating system **516** and/or one or more program modules **515.** All or a portion of the examples disclosed herein may be implemented as a computer program product **520** stored on a transitory or non-transitory computer-usable or computer-readable storage medium (e.g., single medium or multiple media), such as the storage device **514,** which includes complex programming instructions (e.g., complex computer-readable program code) to cause the processor device **502** to carry out the steps described herein. Thus, the computer-readable program code can comprise software instructions for implementing the functionality of the examples described herein when executed by the processor device **502.** The processor device **502** may serve as a controller or control system for the computer system **500** that is to implement the functionality described herein.

The computer system **500** also may include an input device interface **522** (e.g., input device interface and/or output device interface). The input device interface **522** may be configured to receive input and selections to be communicated to the computer system **500** when executing instructions, such as from a keyboard, mouse, touch-sensitive surface, etc. Such input devices may be connected to the processor device **502** through the input device interface **522** coupled to the system bus **506** but can be connected through other interfaces such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may also include a communications interface **526** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

According to some additional examples, a control system comprising one or more control units configured to perform the method according to any of the examples described above is also provided.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method performed by a system (100) for assigning an environmental impact to mass excavation projects (P₁, P₂) utilizing an excavation site (S₁, S₂), wherein the excavation site (S₁, S₂) engage one or more loading assets (140, 150, 160) and one or more transporting assets (141, 151, 161), the method comprising:
*obtaining* (301) a daily operating time (ti) of the one or more loading assets (140, 150, 160) at the excavation site (S₁, S₂) based on the time between a first daily registered transport of excavated material load away from the excavation site (S₁, S₂) and a last daily registered transport of an excavated material load away from the excavation site (S₁, S₂) by the one or more transporting assets (141, 151, 161);
*determining* (302) at least one first environmental impact (E₁) for the one or more loading assets (140, 150, 160) based on the obtained daily operating time (ti) and at least one fuel or energy consumption rate of the one or more loading assets (140, 150, 160);
*obtaining* (303) a distance (d₁₄₁, d₁₅₁, d₁₆₁) to a target depositing site (T₁, T₂) for each registered transport of an excavated material load away from the excavation site (S₁, S₂) by the one or more transporting assets (141, 151, 161);
*determining* (304) at least one second environmental impact (E₂) for the one or more transporting assets (141, 151, 161) based on the obtained distances (d₁₄₁, d₁₅₁, d₁₆₁) and at least one fuel or energy consumption rate of the one or more transporting assets (141, 151, 161); and
*assigning* (305) at least part of the determined first and second environmental impact (E₁, E₂) to one or more of the mass excavation projects (Pi, P₂).

2. The computer-implemented method according to claim 1, wherein the *assigning* (305) is based on an assigned utilization share of the excavation site (S₁, S₂) to each respective mass excavation project (Pi, P₂).

3. The computer-implemented method according to claim 1 or 2, wherein the distance (d₁₄₁, d₁₅₁, d₁₆₁) is obtained based on a predetermined distance associated with the target depositing site (T₁, T₂) assigned to each registered transport of an excavated material load away from the excavation site (S₁, S₂) by the one or more transporting assets (141, 151, 161).

4. The computer-implemented method according to claim 1 or 2, wherein the distance (d₁₄₁, d₁₅₁, d₁₆₁) is obtained based on location data provided by each of the one or more transporting assets (141, 151, 161).

5. The computer-implemented method according to any of claims 1-4, wherein the environmental impact (E₁, E₂) is represented by a carbon-dioxide, CO₂, or carbon-dioxide equivalent, CO₂e, indicator or value.

6. The computer-implemented method according to any of claims 1-5, further comprising
*providing* (306), to a user application, information indicating the environmental impact (E₁, E₂) assigned to a mass excavation project (Pi, P₂) upon receiving a request from the user application.

7. A system (100) for assigning an environmental impact to mass excavation projects (P₁, P₂) utilizing an excavation site (S₁, S₂), wherein the excavation site (S₁, S₂) engage one or more loading assets (140, 150, 160) and one or more transporting assets (141, 151, 161), the system (100) comprising a processing circuitry (410) and a memory (420), the processing circuitry (410) being configured to:
obtain a daily operating time (t₁) of the one or more loading assets (140, 150, 160) at the excavation site (S₁, S₂) based on the time between a first daily registered transport of excavated material load away from the excavation site (S₁, S₂) and a last daily registered transport of an excavated material load away from the excavation site (S₁, S₂) by the one or more transporting assets (141, 151, 161), determine at least one first environmental impact (E₁) for the one or more loading assets (140, 150, 160) based on the obtained daily operating time (ti) and at least one fuel or energy consumption rate of the one or more loading assets (140, 150, 160), obtain a distance (d₁₄₁, d₁₅₁, d₁₆₁) to a target depositing site (T₁, T₂) for each registered transport of an excavated material load away from the excavation site (S₁, S₂) by the one or more transporting assets (141, 151, 161), determine at least one second environmental impact (E₂) for the one or more transporting assets (141, 151, 161) based on the obtained distances (d₁₄₁, d₁₅₁, d₁₆₁) and at least one fuel or energy consumption rate of the one or more transporting assets (141, 151, 161), and assign at least part of the determined first and second environmental impact (E₁, E₂) to one or more of the mass excavation projects (Pi, P₂).

8. The system (100) according to claim 7, wherein the processing circuitry (410) is further configured to assign the determined first and second environmental impact values (E₁, E₂) based on an assigned utilization share of the excavation site (S₁, S₂) to each respective mass excavation project (Pi, P₂).

9. The system (100) according to claim 7 or 8, wherein the processing circuitry (410) is further configured to obtain the distance (d₁₄₁, d₁₅₁, d₁₆₁) based on a predetermined distance associated with the target depositing site (T₁, T₂) assigned to each registered transport of an excavated material load away from the excavation site (S₁, S₂) by the one or more transporting assets (141, 151, 161).

10. The system (100) according to claim 7 or 8, wherein the processing circuitry (410) is further configured to obtain the distance (d₁₄₁, d₁₅₁, d₁₆₁) based on location data provided by each of the one or more transporting assets (141, 151, 161).

11. The system (100) according to any of claims 7-10, wherein the environmental impact (E₁, E₂) is represented by a carbon-dioxide, CO₂, or carbon-dioxide equivalent, CO₂e, indicator or value.

12. The system (100) according to any of claims 7-11, wherein the processing circuitry (410) is further configured to provide, to a user application, information indicating the environmental impact (E₁, E₂) assigned to a mass excavation project (Pi, P₂) upon receiving a request from the user application.

13. A computer program product comprising program code for performing the method according to any of claims 1-6 when said program is run on a processing circuitry (410).

14. A non-transitory computer-readable storage medium comprising instructions, which when executed on a processing circuitry (410), cause the processing circuitry (310) to perform the method of any of claims 1-6.
